# EUROPEAN PATENT APPLICATION

(11) **EP 4 456 509 A1**
(43) Date of publication of application: **30.10.2024**
(21) Application number: 22927012.9
(22) Date of filing: 16.02.2022
(51) Int. Cl.: H04L 61/5046

(54) **ADDRESS SETTING DEVICE, ADDRESS SETTING METHOD, AND ADDRESS SETTING PROGRAM**

(71) Applicant: MITSUBISHI ELECTRIC CORPORATION, Chiyoda-ku Tokyo 100-8310 (JP)
(72) Inventor: HIROSE, Futoshi, Tokyo 100-8310 (JP)
(74) Representative: Pfenning, Meinig & Partner mbB
(86) International application number: PCT/JP2022/006080
(87) International publication number: WO 2023/157109

(57) **Abstract**

An address assignment device (140) is provided to a master station involved in a communication network in which the master station and a plurality of slave stations are connected via a communication line. A provisional address assignment unit (141) acquires, and registers with a provisional address table (32), a provisional address of each slave station, and a distance measurement result obtained by measuring a distance between the master station and each slave station. A duplicate address detecting unit (143) extracts equidistant slave stations on a basis of the distance measurement result of the master station and each slave station; requests each of the equidistant slave stations to measure a distance to a neighboring slave station; acquires a measurement result as a neighboring distance result; and registers provisional addresses of the equidistant slave stations and the neighboring distance result with the provisional address table (32). A slave station address assignment unit (142) analyzes a connecting configuration in the communication network on a basis of the provisional address table (32); and assigns a slave station address for the provisional address of each slave station with using address information (31) in which is registered a slave station address to be assigned to a slave station identified from the connecting configuration.

## Description

### Technical Field

The present disclosure relates to an address assignment device, an address assignment method, and an address assignment program.

### Background Art

Facility apparatuses in facilities such as a building are connected to a communication-controlling facility network for remotely controlling the apparatuses. As the facility network, a bus-type network connected by multi-drop (interconnection wring) cables is sometimes used for good workability. In some of such facility apparatuses, addresses used for communication are not assigned in advance. Therefore, the addresses are manually assigned using a device such as a DIP switch. However, such manual assignment has a problem in that assignment errors are likely to occur and a cost of correcting the assignment errors is high. Note that DIP stands for Dual In-line Package.

Meanwhile, random address assignment using a random value is known as an automated method for address assignment. However, with the random address assignment, a fixed address is not always assigned to a slave station depending on the timing of an address assignment request from the slave station. If a fixed address is not assigned to the slave station, a problem occurs that when a master station communicates with individual slave stations, the master station cannot communicate with an arbitrary slave station.

Therefore, when assigning an address to a slave station, a method that automatically assigns a fixed address to the slave station is required.

Patent Literature 1 discloses an address assignment method that automates address assignment in a serial-bus network formed of an air-conditioning outdoor unit which is a master station and a plurality of air-conditioning indoor units which are slave stations. According to this address assignment method, at least one of an amplitude and a frequency of a signal to be transmitted by the air-conditioning outdoor unit is changed so as to adjust a distance that the signal reaches on the communication line, thereby searching for the air-conditioning indoor units. With this address assignment method, the connection order on the communication line of the plurality of air-conditioning indoor units is discriminated, and the connection order and the addresses are associated with each other, so that address assignment is automated.

### Citation List

### Patent Literature

Patent Literature 1: JP 2020-041735 A

### Summary of Invention

### Technical Problem

The address assignment method of Patent Literature 1 does not take branching of the communication line into consideration. The address assignment method of Patent Literature 1 has a problem in that in network wiring having branches, when there are a plurality of air-conditioning indoor units that are at the same distance from the air-conditioning outdoor unit, it is not possible to uniquely identify the individual air-conditioning indoor units.

An objective of the present disclosure is, in a communication network consisting of a master station and a plurality of slave stations, to automatically allocate addresses as designed to slave stations that are at the same distance from the master station.

### Solution to Problem

An address assignment device according to the present disclosure is provided to a master station involved in a communication network in which the master station and a plurality of slave stations are connected via a communication line, the address assignment device including:
a provisional address assignment unit to acquire a provisional address of each slave station of the plurality of slave stations, and a distance measurement result obtained by measuring a distance between the master station and each slave station; and to register the provisional address of each slave station and the distance measurement result of the master station and each slave station, with a provisional address table;
a duplicate address detecting unit to extract a plurality of slave stations equidistant from the master station, as equidistant slave stations on a basis of the distance measurement result of the master station and each slave station; to request each of the equidistant slave stations to measure a distance to a neighboring slave station; to acquire a result obtained by measuring the distance between each of the equidistant slave stations and the neighboring slave station, as a neighboring distance result; and to register provisional addresses of the equidistant slave stations and the neighboring distance result of each of the equidistant slave stations and the neighboring slave station, with the provisional address table; and
a slave station address assignment unit to analyze a connecting configuration of the mater station with each slave station in the communication network on a basis of the provisional address table; and to assign a slave station address for the provisional address of each slave station with using address information in which is registered a slave station address to be assigned to a slave station identified from the connecting configuration.

### Advantageous Effects of Invention

With an address assignment device according to the present disclosure, an effect can be achieved that in a communication network consisting of a master station and a plurality of slave stations, it is possible to assign addresses as designed to a plurality of slave stations equidistant from the master station.

### Brief Description of Drawings

Fig. 1 is a diagram illustrating a configuration example of a communication network according to Embodiment 1.
Fig. 2 is a diagram illustrating a configuration example of a communication station according to Embodiment 1.
Fig. 3 is a diagram illustrating a configuration example of address information according to Embodiment 1.
Fig. 4 is a diagram illustrating a configuration example of a provisional address table according to Embodiment 1.
Fig. 5 is a sequence diagram illustrating operations of an address assignment process in the communication network according to Embodiment 1.
Fig. 6 is a sequence diagram illustrating the operations of the address assignment process in the communication network according to Embodiment 1.
Fig. 7 is a diagram illustrating an assignment example of the provisional address table according to Embodiment 1.
Fig. 8 is a diagram illustrating an assignment example of the provisional address table according to Embodiment 1.
Fig. 9 is a diagram illustrating an assignment example of the provisional address table according to Embodiment 1.
Fig. 10 is a diagram illustrating a configuration example of an address assignment device according to Embodiment 1.
Fig. 11 is a diagram illustrating another configuration example of the address assignment device according to Embodiment 1.
Fig. 12 is a sequence diagram illustrating operations of an address assignment process in a communication network according to Embodiment 2.
Fig. 13 is a sequence diagram illustrating the operations of the address assignment process in the communication network according to Embodiment 2.
Fig. 14 is a diagram illustrating a configuration example of a communication network according to Embodiment 3.
Fig. 15 is a diagram illustrating a configuration example of address information according to Embodiment 3.
Fig. 16 is a sequence diagram illustrating operations of an address assignment process in the communication network according to Embodiment 3.
Fig. 17 is a sequence diagram illustrating the operations of the address assignment process in the communication network according to Embodiment 3.

### Description of Embodiments

Present embodiments will be described below with referring to drawings. In the drawings, the same or equivalent parts are denoted by the same reference sign. In description of the embodiments, the same or equivalent parts will be arbitrarily omitted or simplified. Arrows in the drawings mainly represent data flows or process flows.

### Embodiment 1.

### *** Description of Configuration ***

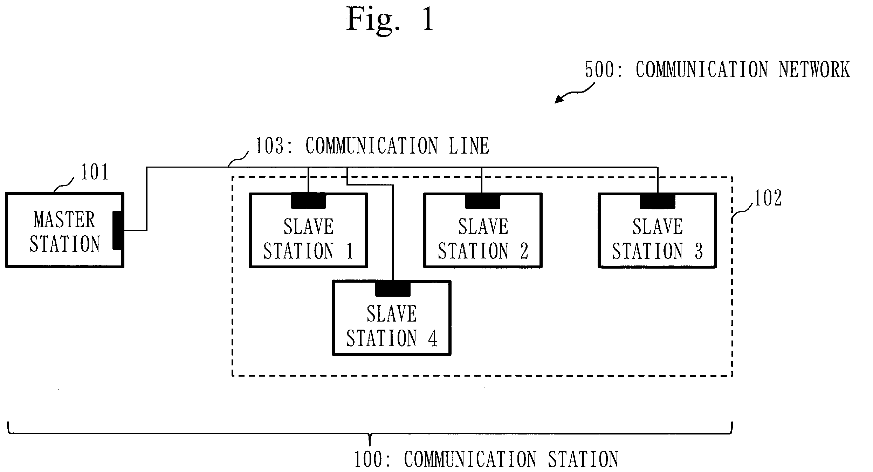

Fig. 1 is a diagram illustrating a configuration example of a communication network 500 according to the present embodiment.

The communication network 500 is a communication system in which a plurality of communication stations 100 are connected. In the communication network 500, a master station 101 and a plurality of slave stations 102 are connected via a communication line 103. Specifically, in the communication network 500, the master station 101 and the plurality of slave stations 102 are connected to a bus-type network.

For example, the communication network 500 is a facility network used in facilities such as a building and a plant. In the facility network, facility apparatuses such as an air-conditioning indoor unit and an air-conditioning outdoor unit are connected to a communication-controlling network for remotely controlling these facility apparatuses.

In the example of Fig. 1, one master station 101 and four slave stations 102 are connected to the communication network 500 as the plurality of communication stations 100. The communication network 500 is a bus-type network connected via a multi-drop cable.

Each slave station has a non-duplicating provisional address that identifies itself. For example, each slave station has a MAC address in Ethernet (registered trademark) as a provisional address.

In the following, assume that when a term "communication station 100" is used, it may refer to the master station 101, the slave station 102, or the master station 101 and the slave station 102.

The configuration of the communication network 500 can be changed as necessary. For example, three or less slave stations can be connected, or five or more slave stations can be connected.

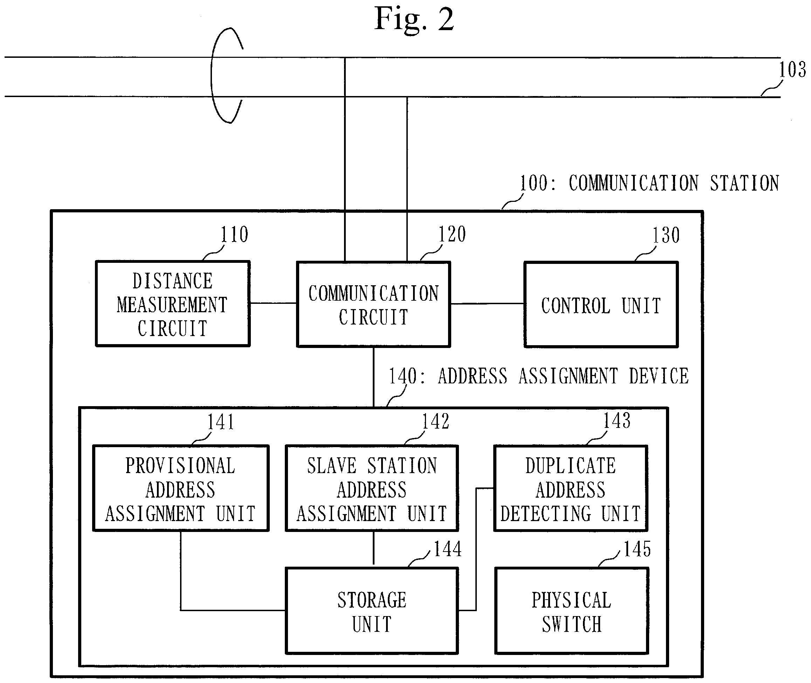

Fig. 2 is a diagram illustrating a configuration example of the communication station 100 according to the present embodiment.

The communication station 100 has a control unit 130, a communication circuit 120, a distance measuring circuit 110, and an address assignment device 140.

The address assignment device 140 has a provisional address assignment unit 141, a slave station address assignment unit 142, a duplicate address detecting unit 143, a storage unit 144, and a physical switch 145. The physical switch 145 is, for example, a DIP switch. Depending on the role of the individual station, the address assignment device 140 need not use some of its functions.

The control unit 130 is formed of, for example, a CPU or an MPU. Note that CPU stands for Central Processing Unit, and MPU stands for Micro Processing Unit. The control unit 130 has a computation device, a storage unit, and various types of inputs and outputs. The storage unit involves a nonvolatile memory and a volatile memory. A program to control the facility apparatuses is stored in the nonvolatile memory.

The control unit formed of a CPU or the like controls the facility apparatuses and communication of its own station. For example, an air-conditioning system can be formed by connecting a fan or a compressor to a control unit of a master station, and connecting a louver or the like to a control unit of a slave station and controlling it.

The communication circuit 120 is connected to the communication line so that the communication circuit 120 can perform data communication by the control unit. The communication circuit 120 is also provided with a collision avoidance algorithm so collision of communication data does not occur on the communication line. An example of the collision avoidance algorithm is CSMA/CD. Note that CSMA/CD stands for Carrior Sense Multiple Access/Collision Detection. In addition, the communication circuit 120 enables picking up the communication.

By an arbitrary method, the distance measuring circuit 110 can measure a distance to each station connected via the communication line 103. For example, the distance measuring circuit 110 can derive the distance by measuring a communication delay time between the master station and a slave station which is a distance measurement target.

The address assignment device 140 is constituted of the provisional address assignment unit 141, the slave station address assignment unit 142, the duplicate address detecting unit 143, the storage unit 144, and the physical switch 145.

The storage unit 144 of the address assignment device 140 has the volatile memory and the nonvolatile memory.

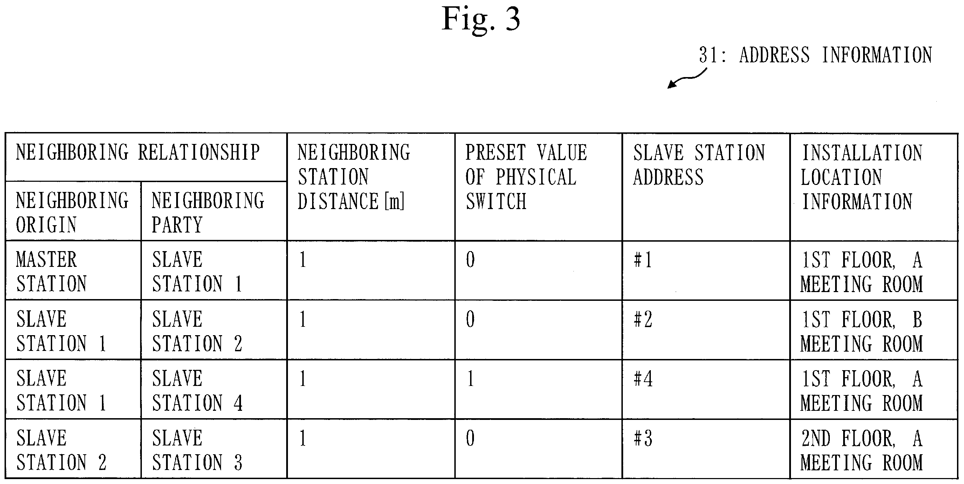

Fig. 3 is a diagram illustrating a configuration example of address information 31 according to the present embodiment.

The master station stores the address information 31 in the storage unit 144. For example, the storage unit 144 may acquire the address information 31 from an outside by a management station connected via the communication line 103, and may store the acquired address information 31.

In the address information 31 are registered slave station addresses which are to be assigned to the slave stations identified from a connecting configuration of the master station with the slave stations in the communication network 500.

As illustrated in Fig. 3, a neighboring relationship, a neighboring station distance, a preset value of the physical switch, a slave station address, and installation location information are registered in the address information 31.

The neighboring relationship expresses a neighboring relationship between a neighboring origin and a neighboring party. The neighboring relationship expresses a connecting relationship in the communication network 500.

The neighboring station distance is a distance between stations.

The slave station address is an address to be assigned to the slave station.

The preset value of the physical switch is a preset value of, for example, the DIP switch.

The installation location information is information of a location where the slave station is to be installed.

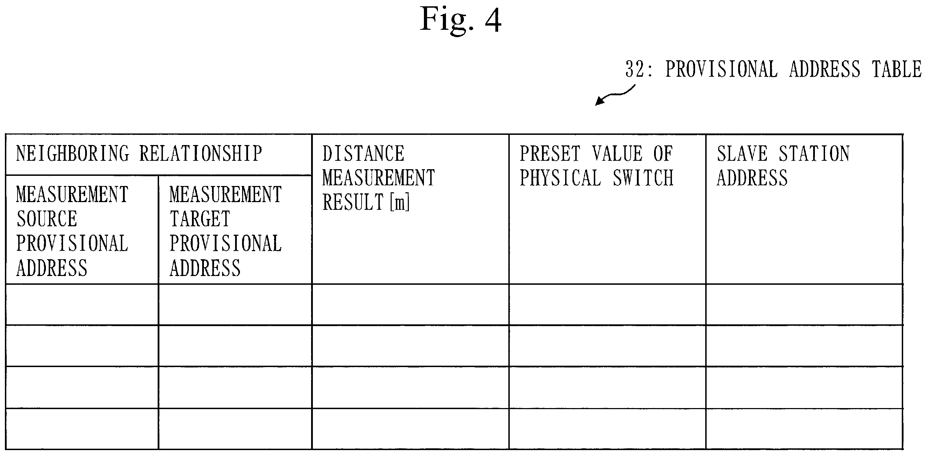

Fig. 4 is a diagram illustrating a configuration example of a provisional address table 32 according to the present embodiment.

The master station stores, in the storage unit 144, the provisional address table 32 which registers information such as a provisional address of the slave station and a distance measurement result.

A neighboring relationship formed of a measurement source provisional address and a provisional address of the measurement target, the distance measurement result, the preset value of the physical switch, and the slave station address are registered with the provisional address table 32.

As the neighboring relationship, a neighboring relationship between the measurement source provisional address and the provisional address of the measurement target is registered. The neighboring relationship expresses the connecting relationship in the communication network 500.

As the distance measurement result, a result of measuring a distance between stations is registered.

As the preset value of the physical value, a value assigned in, for example, the IDP switch is registered.

As the slave station address, an address finally assigned to the slave station is registered.

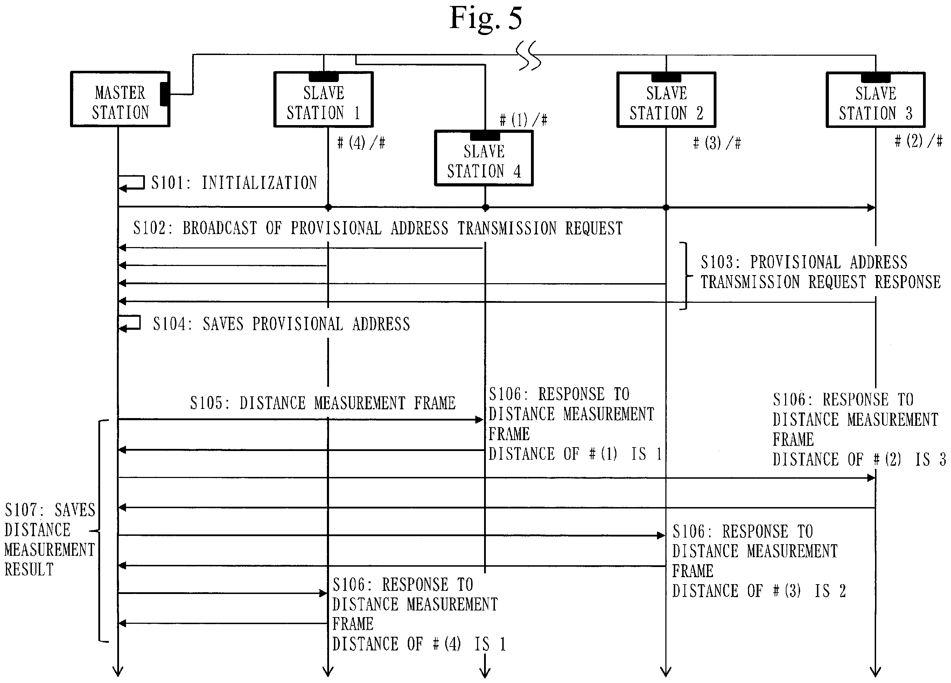

As the provisional address and the address of the master station, an address that does not duplicate on the communication network is used. For example, in the communication network 500 of Fig. 5 to be described later, an address such as #0 is used for the master station. The storage unit 144 of the slave station does not necessarily hold the address information 31 or the provisional address table 32, and may hold a provisional address (a MAC address or the like) of its own station or a slave station address of its own station separately.

The provisional address assignment unit 141 of the address assignment device 140 can assign a provisional address with using a technique such as a random number value in response to a request from the control unit 130 or another station.

The slave station address assignment unit 142 of the address assignment device 140 processes deciding the slave station address to be assigned and assigning the slave station address, in response to a request from the control unit 130 or another station.

The duplicate address detecting unit 143 of the address assignment device 140 detects address duplication from, for example, a picked-up communication content.

A value of 1 bit or more can be set in the physical switch 145 of the address assignment device 140 by on/off operation of the switch, and is referred to when necessary.

Note that the address assignment device 140 may have different roles in the master station and in the slave stations, and can selectively use necessary functions according to an instruction from the control unit 130.

### *** Description of Operations ***

Operations of the address assignment process in the communication network 500 according to the present embodiment will now be described. The operation procedure of each station in the communication network 500 corresponds to an address assignment method. A program that implements the operations of each station in the communication network 500 corresponds to an address assignment program.

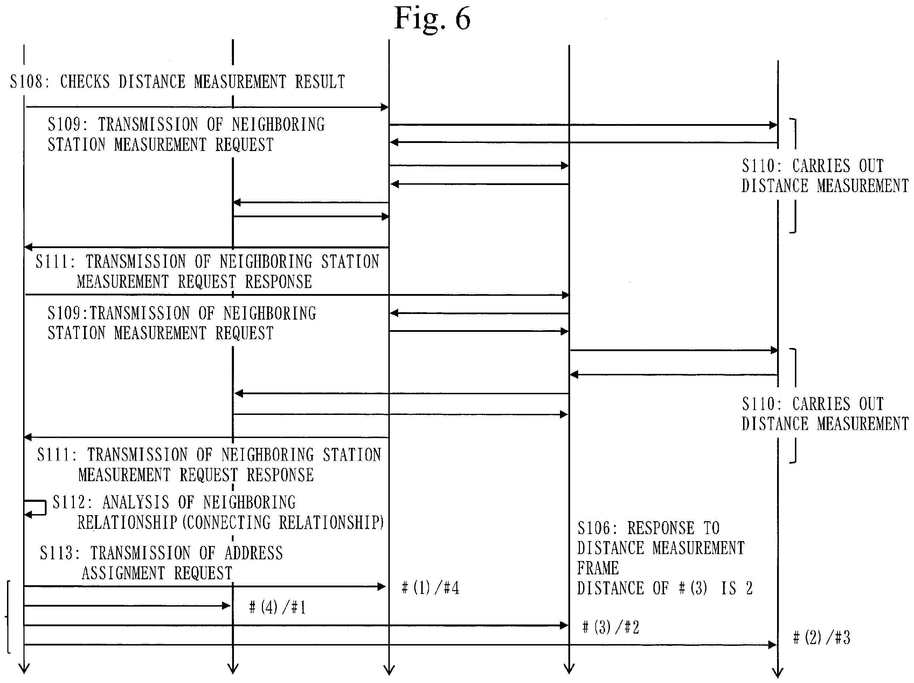

Figs. 5 and 6 are sequence diagrams illustrating the operations of the address assignment process in the communication network 500 according to the present embodiment.

Fig. 6 illustrates a sequence as a sequel to the sequence of Fig. 5.

Each slave station has a provisional address (#(n) in Figs. 5 and 6 where n is a positive integer) and a slave station address (#m in Figs. 5 and 6 where m is a positive integer), as illustrated in Fig. 5. The slave station address is not assigned at the initial time point.

As illustrated in Fig. 3, a distance between the stations is 1 m, and a distance between the master station and each slave station is a total sum of distances between the stations passed through. For example, a distance between the master station and a slave station 4 is 2 m. Furthermore, note that 1 is set in the DIP switch of the slave station 4, and that 0 is set in the DIP switches of the other slave stations.

### < Provisional Address assignment Process >

First, the provisional address assignment unit 141 of the master station acquires the provisional address of each slave station of the plurality of slave stations and a distance measurement result obtained by measuring the distance between the master station and each slave station. The provisional address assignment unit 141 of the master station registers the provisional address of each slave station and the distance measurement result of the master station and each slave station, with the provisional address table 32.

The provisional address assignment unit 141 of the master station transmits, to each slave station of the plurality of slave stations, a provisional address transmission request which requests transmission of the provisional address. Then, the provisional address assignment unit 141 of the master station receives the provisional address of each slave station of the plurality of slave stations, as a response to the provisional address transmission request.

Specifically, this is as follows.

In step S101, the provisional address assignment unit 141 of the master station initializes the provisional address table 32 held in the storage unit 144.

Then, in step S102, the provisional address assignment unit 141 of the master station broadcasts the provisional address transmission request to the slave stations.

In step S103, the slave station, when having accepted the provisional address transmission request, transmits the provisional address transmission request response including the provisional address of the own station to the master station. At this time, if a value is set in the physical switch 145 of the own station, the slave station may transmit the value to the master station by including the value in the provisional address transmission request response.

In step S104, the provisional address assignment unit 141 of the master station accepts the provisional address transmission request response from the slave station, and registers the provisional address, included in the provisional address transmission request response, of the slave station with the provisional address table 32. If the provisional address transmission request response includes the value being set in the physical switch, the provisional address assignment unit 141 of the master station also registers that value with the provisional address table 32.

In step S105, the provisional address assignment unit 141 of the master station measures a distance with respect to the provisional address of the slave station, which is registered with the provisional address table 32. Specifically, the master station transmits a distance measurement frame to the provisional address of the slave station, which is listed on the provisional address table 32.

In step S106, the slave station transmits a distance to the master station, as a distance measurement frame response.

In step S107, the master station registers a distance measurement result, being a distance to each slave station, which is obtained from the distance measurement frame response, with the provisional address table 32 as information tied with the provisional address of the slave station.

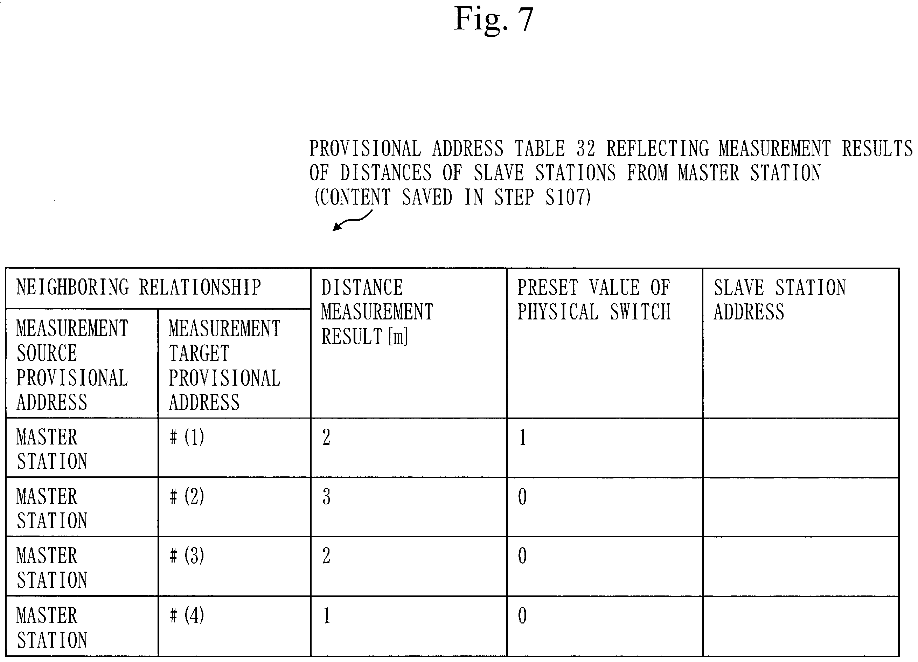

Fig. 7 is a diagram illustrating an assignment example of the provisional address table 32 according to the present embodiment.

Fig. 7 illustrates the provisional address table 32 that reflects measurement results of distances of the slave stations from the master station.

### < Duplicate Address Detection Process >

The duplicate address detecting unit 143 extracts a plurality of slave stations equidistant from the master station, as equidistant slave stations 104 on a basis of the distance measurement result of the master station and each slave station. The duplicate address detecting unit 143 of the master station requests each of the equidistant slave stations 104 to measure a distance to a neighboring slave station (neighboring station measurement request). Then, the duplicate address detecting unit 143 of the master station acquires a result obtained by measuring the distance between each of the equidistant slave stations 104 and the neighboring slave station, as a distance measurement result (neighboring distance result).

The duplicate address detecting unit 143 of the master station registers provisional addresses of the equidistant slave stations 104 and the distance measurement result (neighboring distance result) of each of the equidistant slave stations 104 and the neighboring slave station, with the provisional address table 32.

Specifically, this is as follows.

In step S108, after measurement of the distance to the slave station is completed concerning every provisional address listed on the provisional address table 32, the duplicate address detecting unit 143 of the master station examines the distance between the master station and the slave station, which is registered with the provisional address table 32. The duplicate address detecting unit 143 of the master station checks whether the distance registered with the provisional address table 32 coincides with the distance measurement result obtained from the neighboring station distance which is set in the address information 31 of Fig. 3.

In the communication network 500 of Fig. 1, according to Fig. 7, a slave station 2 (#(3)) and the slave station 4 (#(1)) are equidistant slave stations 104 which are equidistant from the master station. The duplicate address detecting unit 143 of the master station recognizes that there are two slave stations that have the same distance measurement result. Namely, the equidistant slave stations 104 are the slave station 2 and the slave station 4.

In step S109, the duplicate address detecting unit 143 of the master station transmits the neighboring station measurement request to the slave station 2 and the slave station 4 by including the provisional address of the measurement-target slave station into the neighboring station measurement request, in order to examine from the distance measurement result which slave stations the slave station 2 and the slave station 4 neighbor to.

In step S110, the slave stations that have accepted the neighboring station measurement request carry out measurement of the distances between the slave stations on a basis of the provisional addresses of the measurement-target slave stations .

In step S111, when having completed collecting all of the provisional addresses of the measurement-target slave stations, the slave stations that have accepted the neighboring station measurement request transmit the measurement result to the master station as a neighboring station measurement request response.

The duplicate address detecting unit 143 of the master station registers a content of the neighboring station measurement request response with the provisional address table 32.

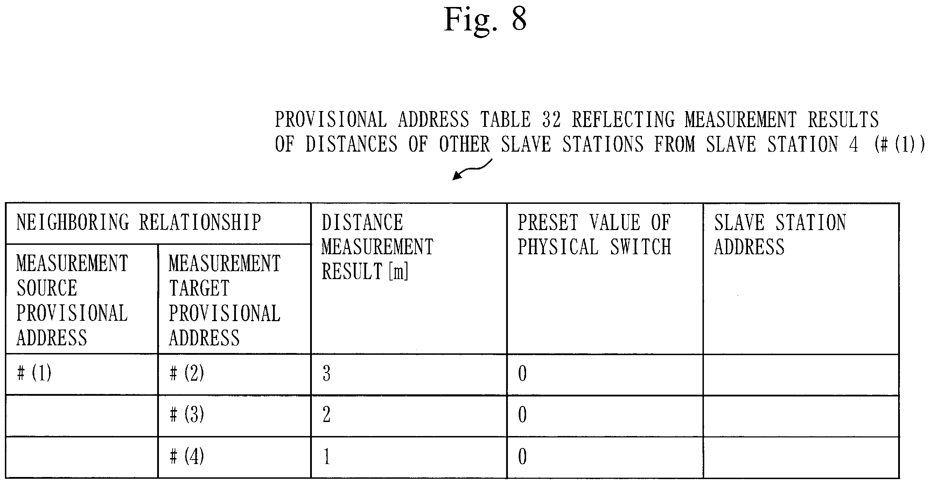

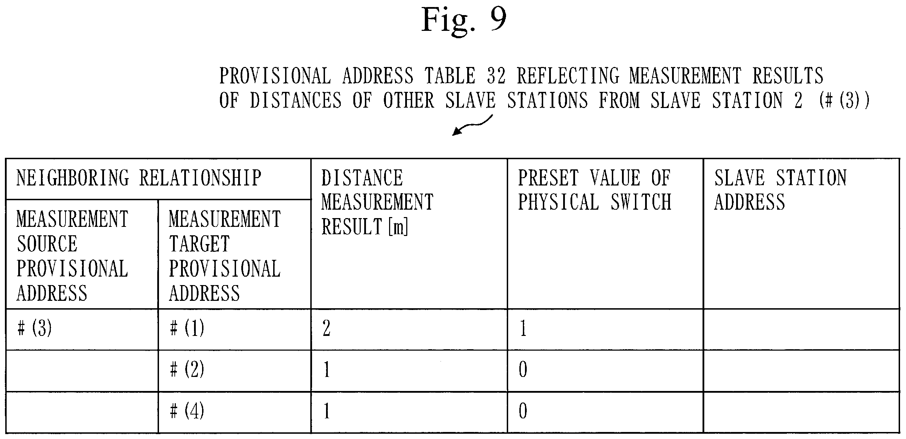

Figs. 8 and 9 are diagrams illustrating assignment examples of the provisional address table 32 according to the present embodiment.

Fig. 8 illustrates the provisional address table 32 that reflects measuring results of distances of the other slave stations from the slave station 4 (#(1)).

Fig. 9 illustrates the provisional address table 32 that reflects measurement results of distances of the other slave stations from the slave station 2 (#(3)).

### < Slave Station Address assignment Process >

The slave station address assignment unit 142 of the master station analyzes the connecting configuration of the mater station with each slave station in the communication network 500 on a basis of the provisional address table 32. The slave station address assignment unit 142 assigns a slave station address for the provisional address of each slave station, with using the address information 31 in which is registered a slave station address to be assigned to a slave station identified from the connecting configuration obtained by analysis.

Note that the slave station address assignment unit 142 of the master station may acquire, from each slave station, a value being set in the physical switch provided to that slave station, as assignment information. In this case, the slave station address assignment unit 142 of the master station assigns the slave station address for the provisional address of the slave station identified from the acquired assignment information and the acquired connecting configuration.

Specifically, this is as follows.

In step S112, the slave station address assignment unit 142 of the master station analyzes the neighboring relationship of the communication network 500 as the connecting relationship on a basis of the provisional address table 32 in which are set the accepted neighboring distance result, the measurement result of the distances between the master station and the slave stations, and the values being set in the physical switches.

In the configuration of the communication network 500 illustrated in Fig. 1, according to Fig. 9, a distance between the slave station 2 and a slave station 3 is 1 m. Also, according to Fig. 8, a distance from the slave station 4 to the slave station 3 is 3 m. The slave station address assignment unit 142 of the master station can grasp the configuration of the communication network 500 from these characteristic distance measurement results. Alternatively, since the value that is set in the physical switch of the slave station 4 is 1 and the value that is set in the physical switch of the slave station 2 is 0, the slave station 2 and the slave station 4 can be discriminated from each other. Hence, the slave station address assignment unit 142 of the master station can associate the slave station address with a corresponding provisional address of the slave station by comparing the neighboring relationship of the address information 31 of Fig. 3 with the neighboring relationship indicated by the provisional address tables 32 of Figs. 7 to 9.

In step S113, the slave station address assignment unit 142 of the master station transmits to the slave station an address assignment request including a slave station address corresponding to the provisional address of the slave station.

Specifically, a slave station address #1 is assigned to the slave station 1 (provisional address #(4)). A slave station address #2 is assigned to the slave station 2 (provisional address #(3)). A slave station address #3 is assigned to the slave station 3 (provisional address #(2)). A slave station address #4 is assigned to the slave station 4 (provisional address #(1)).

Concerning the above address assignment process, when address assignment is completed and a new slave station is connected to the communication network 500 which is under communication control, the address assignment process can be started again.

As described above, in the communication network according to the present embodiment, the master station and the plurality of slave stations have individual distance measurement circuits to measure distances to each other. In the communication network 500, the master station has a provisional address table to keep provisional addresses used for discriminating the slave stations. The master station collects the provisional addresses of the slave stations, measures the distances to the slave stations having the provisional addresses, and saves the provisional address table such that the provisional addresses and the distance measurement results are associated with each other.

As a provisional address table to be saved finally, only the provisional address table of Fig. 7 to which finally assigned slave station addresses are added may be saved. Alternatively, all the provisional tables of Figs. 7 to 9 including individual measurement results, as in the provisional address tables of Figs. 8 and 9, may be saved.

Furthermore, the master station instructs the slave stations to measure distances between the slave stations, and collects distance measurement results obtained by measurement with the slave stations. Then, the master station identifies the network configuration of the communication system from the distance measurement result, and assigns the slave station address to be assigned, to the slave station such that the slave station address to be assigned and the slave station in the identified network configuration are associated with each other.

The slave stations have physical switches, and read and transmit preset information of the physical switches to the master station. The master station discriminates the slave stations by combining the preset information of the physical switches with the distance measurement results.

### *** Other Configurations ***

### < Modification 1 >

In step S109, the duplicate address detecting unit of the master station transmits the neighboring station measurement request to the slave station 2 and the slave station 4 by including the provisional address of the measurement-target slave station into the neighboring station measurement request, in order to examine from the distance measurement result which slave stations the slave station 2 and the slave station 4 neighbor to.

A mode will be described in which, when including the provisional address of the measurement-target slave station into the neighboring station measurement request, a provisional address list is employed.

Note that the master station holds the distance measurement results obtained by the slave stations, and the provisional addresses, in the form of a provisional address table. The master station, when having detected, on the provisional address table, the equidistant slave stations which are equidistant from the master station, generates a provisional address list for measuring the distances from the equidistant slave stations to the other slave stations. Based on the provisional address list, the master station transmits the provisional addresses of the measurement-target slave stations to the equidistant slave stations by including the provisional addresses into the neighboring station measurement request.

Specifically, this is as follows. Assume that in the following, #(1) signifies a slave station having a provisional address #(1).
* Assume that the slave stations that are equidistant are #(1) and #(3).
* The slave station transmits the neighboring station measurement request to #(1) and #(3) (step S109).
* At this time, in step S 109, the master station gives an instruction to #(1) to measure #(2) ~ #(4), the master station excluded. The master station also gives an instruction to #(3) to measure #(2) and #(4), the master station and #(1) excluded.
* From the above, between distance measurement of #(1) -> #(3) and distance measurement of #(3) -> #(1), only one measurement on a single side suffices.

Assume that a list containing the outputted instruction for #(1) to measure #(2) ~ #(4) and the outputted instruction for #(3) to measure #(2) and #(4) in this manner is the provisional address list.

By using the provisional address list, it is possible to limit the measurement-target slave stations, so that an effect of reducing the number of addresses of duplicated measurement targets in advance can be achieved.

Also, when giving different instructions to the individual slave stations on a basis of the provisional address list (that is, when transmitting different neighboring station measurement requests), it is not necessary to instruct all of the equidistant slave stations to perform distance measurement. A slave station can be identified also by instructing distance measurement to {(the number of equidistant slave stations) - 1} of slave stations. It is possible to identify that a slave station not having done distance measurement is the slave station that remains finally.

### *** Description of Effect of Embodiment ***

As described above, with the communication network 500 according to the present embodiment, because of a distance measurement function of each station, the master station can uniquely identify a slave station, and can assign a fixed address to the slave station. Furthermore, with the communication network 500 according to the present embodiment, it is possible to assign slave station addresses as designed also to a plurality of slave stations which are equidistant from the master station.

### *** Hardware Configuration Example ***

The functions of the address assignment device 140 may be implemented by software, or may be implemented by hardware.

First, description will be made on a hardware configuration example of a case where the functions of the address assignment device 140 are implemented by software.

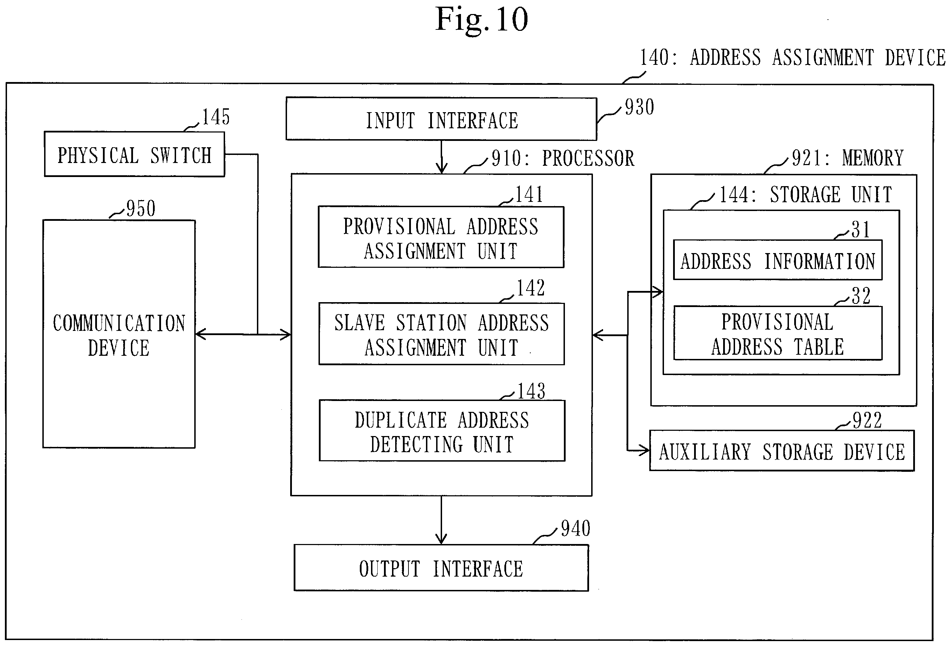

Fig. 10 is a diagram illustrating a configuration example of the address assignment device 140 according to the present embodiment.

The address assignment device 140 is a computer. The address assignment device 140 is provided with a processor 910, as well as other hardware devices such as a memory 921, an auxiliary storage device 922, an input interface 930, an output interface 940, and a communication device 950. The address assignment device 140 is also provided with a physical switch 145. The processor 910 is connected to the other hardware devices via a signal line and controls the other hardware devices.

The address assignment device 140 is provided with a provisional address assignment unit 141, a slave station address assignment unit 142, a duplicate address detecting unit 143, and a storage unit 144, as function elements. Address information 31 and a provisional address table 32 are stored in the storage unit 144.

Functions of the provisional address assignment unit 141, slave station address assignment unit 142, and duplicate address detecting unit 143 are implemented by software. The storage unit 144 is provided to the memory 921. The storage unit 144 may be provided to the auxiliary storage device 922, or may be provided to the memory 921 and the auxiliary storage device 922 by distribution.

The processor 910 is a device that implements the address assignment program. The address assignment program is a program that implements the functions of the provisional address assignment unit 141, slave station address assignment unit 142, and duplicate address detecting unit 143.

The processor 910 is an IC which performs computation processing. Specific examples of the processor 910 are a CPU, a DSP, and a GPU. Note that IC stands for Integrated Circuit, DSP for Digital Signal Processor, and GPU for Graphics Processing Unit.

The memory 921 is a storage device that stores data temporarily. A specific example of the memory 921 is an SRAM or a DRAM. Note that SRAM stands for Static Random-Access Memory, and DRAM for Dynamic Random-Access Memory.

The auxiliary storage device 922 is a storage device which keeps data. A specific example of the auxiliary storage device 922 is an HDD. The auxiliary storage device 922 may be a portable storage medium such as an SD (registered trademark) memory card, a CF, a NAND flash, a flexible disk, an optical disk, a compact disk, a Blu-ray (registered trademark) disc, and a DVD. Note that HDD stands for Hard Disk Drive, SD (registered trademark) for Secure Digital, CF for CompactFlash (registered trademark), and DVD for Digital Versatile Disk.

The input interface 930 is a port to be connected to an input device such as a mouse, a keyboard, and a touch panel. The input interface 930 is specifically a USB terminal. The input interface 930 may be a port to be connected to a LAN. Note that USB stands for Universal Serial Bus, and LAN for Local Area Network.

The output interface 940 is a port to which a cable of an output apparatus such as a display is to be connected. The output interface 940 is specifically a USB terminal or an HDMI (registered trademark) terminal. The display is specifically an LCD. The output interface 940 is also called a display interface. Note that HDMI (registered trademark) stands for High Definition Multimedia Interface, and LCD for Liquid Crystal Display.

The communication device 950 has a receiver and a transmitter. The communication device 950 is connected to a communication network such as a LAN, the Internet, and a telephone line. The communication device 950 is specifically a communication chip or an NIC. Note that NIC stands for Network Interface Card.

The address assignment program is run in the address assignment device 140. The address assignment program is read by the processor 910 and is run by the processor 910. Not only the address assignment program but also an OS is stored in the memory 921. Note that OS stands for Operating System. The processor 910 runs the address assignment program while running the OS. The address assignment program and the OS may be stored in the auxiliary storage device 922. The address assignment program and the OS stored in the auxiliary storage device 922 are loaded to the memory 921 and run by the processor 910. The address assignment program may be incorporated in the OS partly or entirely.

The address assignment device 140 may be provided with a plurality of processors that substitute for the processor 910. The plurality of processors share running of the address assignment program. Each processor is a device that runs the address assignment program just as the processor 910 does.

Data, information, signal values, and variable values which are utilized, processed, or outputted by the address assignment program are stored in the memory 921, the auxiliary storage device 922, or a register or cache memory in the processor 910.

The word "unit" in each of the terms "provisional address assignment unit 141 ", "slave station address assignment unit 142", and "duplicate address detecting unit 143" may be replaced by "circuit", "stage", "procedure", "process", or "circuitry". The address assignment program causes the computer to execute the provisional address assignment process, the address assignment process, and the duplicate address detection process. The word "process" in each of the terms "provisional address assignment process", "address assignment process", and "duplicate address detection process" may be replaced by "program", "program product", or "program-stored computer readable storing medium", or "program-recorded computer readable recording medium". The address assignment method is a method carried out by the address assignment device 140 running the address assignment program.

The address assignment program may be stored in a computer readable recording medium and provided in the form of the recording medium. The address assignment program may be provided in the form of a program product.

According to another configuration example of the address assignment device 140, the functions of the provisional address assignment unit 141, slave station address assignment unit 142, and duplicate address detecting unit 143 may be implemented by hardware.

Specifically, the address assignment device 140 is provided with an electronic circuit 909 in place of the processor 910.

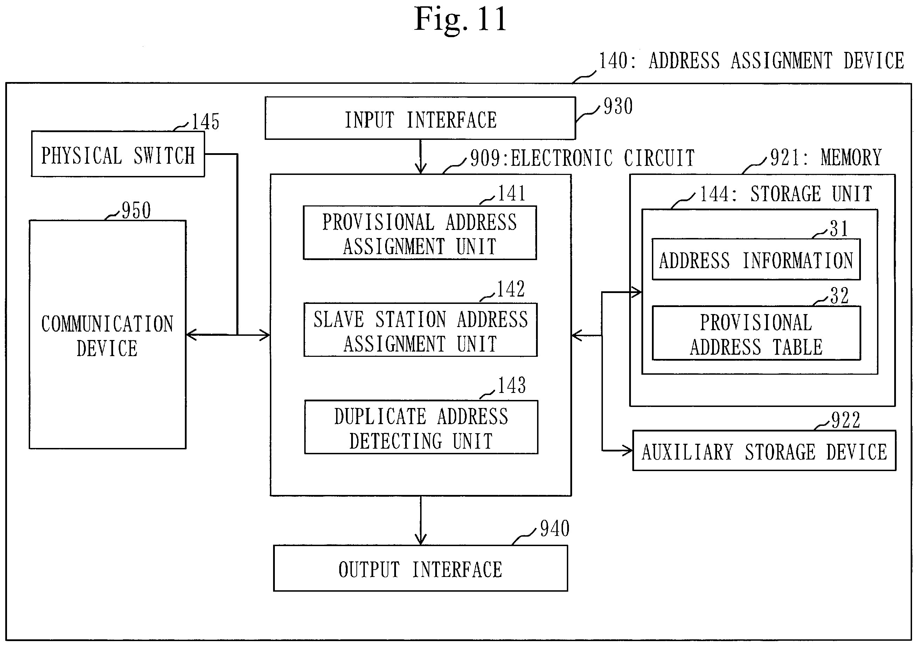

Fig. 11 is a diagram illustrating another configuration example of the address assignment device 140 according to the present embodiment.

The electronic circuit 909 is a dedicated electronic circuit that implements the functions of the provisional address assignment unit 141, slave station address assignment unit 142, and duplicate address detecting unit 143. The electronic circuit 909 is specifically a single circuit, a composite circuit, a programmed processor, a parallel-programmed processor, a logic IC, a GA, an ASIC, or an FPGA. Note that GA stands for Gate Array, ASIC for Application Specific Integrated Circuit, and FPGA for Field-Programmable Gate Array.

The functions of the provisional address assignment unit 141, slave station address assignment unit 142, and duplicate address detecting unit 143 may be implemented by one electronic circuit, or may be implemented by a plurality of electronic circuits by distribution.

According to still another example, some of the functions of the provisional address assignment unit 141, slave station address assignment unit 142, and duplicate address detecting unit 143 may be implemented by an electronic circuit, and the remaining functions may be implemented by software. Some or all of the functions of the provisional address assignment unit 141, slave station address assignment unit 142, and duplicate address detecting unit 143 may be implemented by firmware.

The processor and the electronic circuit are called processing circuitry as well. That is, the functions of the provisional address assignment unit 141, slave station address assignment unit 142, and duplicate address detecting unit 143 are implemented by processing circuitry.

### Embodiment 2.

In the present embodiment, differences from Embodiment 1 will mainly be described.

In the present embodiment, a configuration having the same function as its equivalent in Embodiment 1 will be denoted by the same reference sign as that in Embodiment 1, and its description will be omitted.

### *** Description of Configuration ***

According to Embodiment 1, in the configuration of the communication network 500 of Fig. 1, the slave station having a provisional address beforehand is a prerequisite. If the slave station does not have a provisional address, a distance measurement target cannot be specified.

In view of this, in the present embodiment, a mode will be described in which a provisional address is assigned to the slave station by the master station so that the slave station is identified temporarily.

A configuration of a communication network 500 according to the present embodiment is the same as that in Embodiment 1.

### *** Description of Operations ***

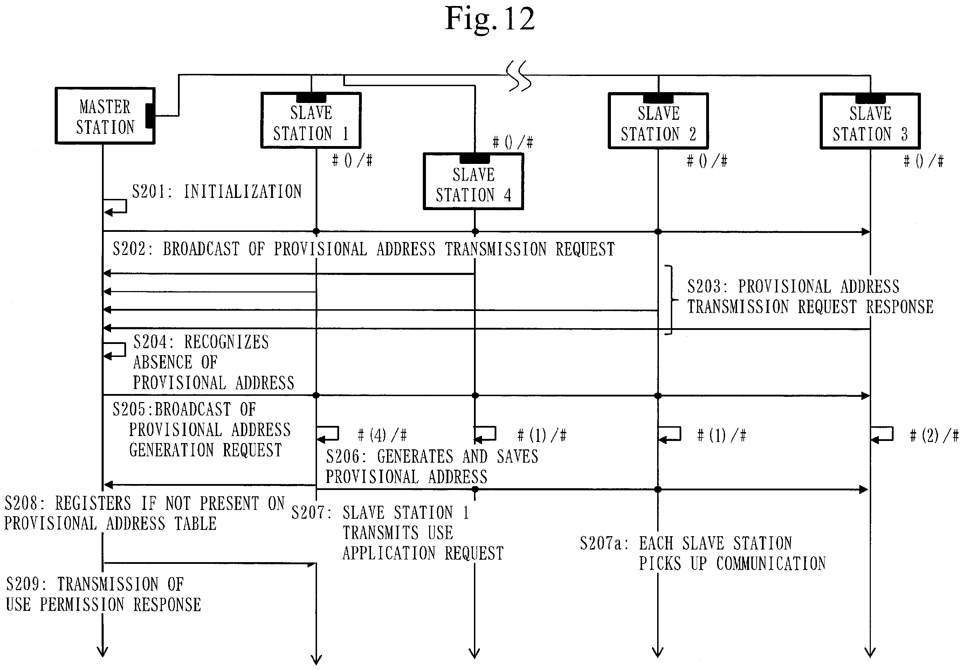

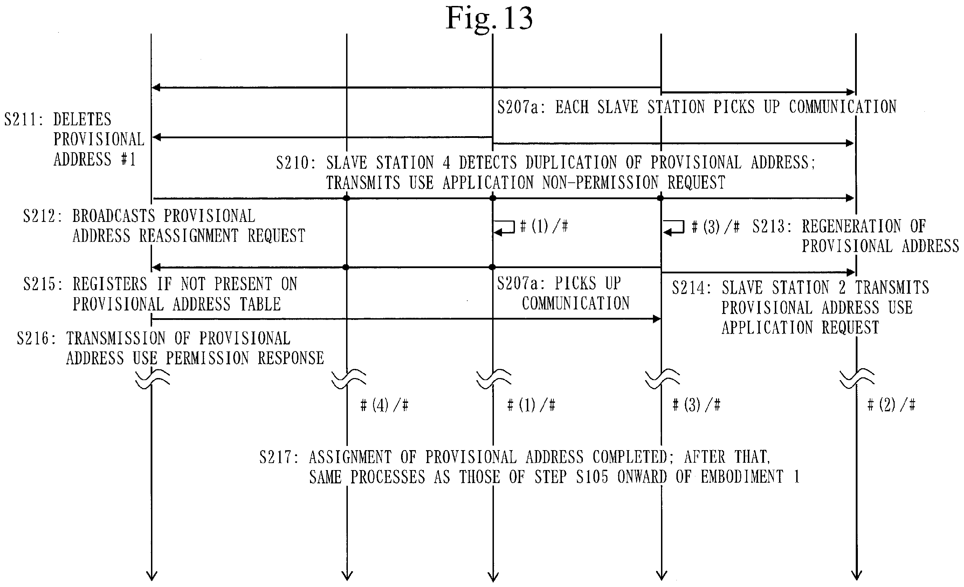

Figs. 12 and 13 are sequence diagrams illustrating operations of the address assignment process in the communication network 500 according to the present embodiment.

Fig. 13 illustrates a sequence as a sequel to the sequence of Fig. 12.

In the present embodiment, a provisional address assignment unit 141 of a master station, when having detected that a provisional address is not assigned to each slave station, transmits a provisional address generation request which requests generation of a provisional address, to each slave station. The provisional address assignment unit 141 of the master station receives a provisional address of each slave station as a response to the provisional address generation request, and checks whether or not the received provisional address is registered with a provisional address table 32. When having confirmed that the received provisional address is not registered with the provisional address table 32, the provisional address assignment unit 141 of the master station registers the received provisional address as a measurement target provisional address on neighboring relationship of the provisional address table 32, and transmits a use permission of the received provisional address to a transmission-source slave station.

The provisional address assignment unit 141 of the slave station, when having received from the master station the provisional address generation request which requests generation of the provisional address, generates a provisional address for the own station. Then, the provisional address assignment unit 141 of the slave station transmits a use application request which requests use application of the provisional address of the own station, to the master station.

A duplicate address detecting unit 143 of the slave station picks up the use application request sent by another slave station. The duplicate address detecting unit 143 of the own station, when having detected a provisional address that duplicates the provisional address of the own station, transmits a use application non-permission request to the master station and a transmission-source slave station having a provisional address that duplicates the provisional address of the own station. The use application non-permission request requests non permission of a use application of a provisional address that duplicates the provisional address of the own station.

Specifically, this is as follows.

Each slave station has a provisional address illustrated in Fig. 12 (#(n) in Figs. 12 and 13 where n is a positive integer) and a slave station address (#m in Figs. 12 and 13 where m is a positive integer). The provisional address and the slave station address are not assigned at the initial time point.

The master station holds, in a storage unit 144, address information 31 to be assigned, and the provisional address table 32.

In step S201, the master station initializes the provisional address table 32.

In step S202, the master station broadcasts a provisional address transmission request to the slave stations.

In step S203, since the slave stations do not have a provisional address of their own, transmit a provisional address transmission request response having data expressing not-holding a provisional address, to the master station.

In step S204, the master station recognizes that the slave stations do not have a provisional address.

In step S205, the master station broadcasts the provisional address generation request to the slave stations.

In step S206, the slave stations, after receiving the provisional address generation request, generate a provisional address of the own stations with using a random number or the like. The slave stations store the generated provisional address to volatile memories or nonvolatile memories of the own stations.

After that, in step S207, the slave stations transmit the generated provisional address to the master station as the provisional address use application request regularly at an arbitrary timing. At this time, for example, a hash value for communication discrimination may be included in the transmission data and may be used for discrimination of a transmission frame.

In step S208, the master station accepts the provisional address use application request and confirms that the provisional address table does not have the provisional address applied for. Then, the master station registers the relevant provisional address with the provisional address table 32.

In step S209, the master station transmits a use permission response to a transmission-source slave station having the relevant provisional address.

In step S207a, each slave station picks up a use application request communication being transmitted via the communication line, and examines if there is a use application request communication that includes the same provisional address as that of the own station.

In step S210, when a slave station detects another slave station in which the same provisional address as that of the own station is assigned, the slave station transmits a use application non-permission request which invalidates the relevant provisional address, to the master station and the slave station having the relevant provisional address.

In the example of Figs. 12 and 13, the slave station 2 and the slave station 4 generate the same provisional address #(1). The slave station 4 detects duplication of the provisional address and transmits a use application non-permission request.

In step S211, the master station, when having received the use application non-permission request, deletes registration of the provisional address included in the use application non-permission request, from the provisional address table 32.

In step S212, the master station transmits a provisional address reassignment request which reassigns a provisional address. At this time, a slave station to which a provisional addresses is to be reassigned is only a slave station having a provisional address specified by the use application non-permission request.

In step S213, a slave station that has received the provisional address reassignment request assigns the provisional address of the own station again by using a random number or the like.

The master station has received the use application non-permission request being communicated via the line, and is aware of a provisional address that will not be permitted. The provisional address reassignment request transmitted by the master station can specify an address that will not be permitted for the transmission destination. Alternatively, the master station broadcasts a non-permission address by including it in data of the provisional address reassignment request. Each slave station that has received the provisional address reassignment request by broadcast checks the non-permission address included in the provisional address reassignment request, and compares it with a provisional address of the own station, so that it can decide whether reassignment is necessary or not.

In step S214, a slave station transmits a use application request of the provisional address that has been reassigned. In the present case, the slave station 2 transmits a provisional address use application request of the provisional address that has been reassigned.

In step S215, the master station accepts the provisional address use application request, and confirms that the provisional address table does not have the provisional address applied for. Then, the master station registers the relevant provisional address with the provisional address table.

In step S216, the master station transmits a use permission response to the transmission-source slave station of the relevant provisional address. The slave station that has accepted the use permission response ends regular transmission of the provisional address use application request.

In step S217, assignment of the provisional address to the slave station is completed.

In the specific case of Fig. 13, a provisional address #(4) is assigned to the slave station 1. A provisional address #(3) is assigned to the slave station 2. A provisional address #(2) is assigned to the slave station 3. A provisional address #(1) is assigned to the slave station 4.

After that, a distance measurement target is specified as described in Embodiment 1 with using the provisional address assigned to the slave station, and address assignment is performed.

As has been described above, in the communication network according to the present embodiment, the slave station has a means for generating a provisional address when not having a provisional address, according to an instruction from the master station, a means for picking up a communication content of the communication line, and a means for analyzing the picked-up communication content.

The master station has a means for collecting and keeping the provisional address.

When the slave station picks up a content of provisional address assignment communication that is being communicated and detects a provisional address assignment communication that is the same as that of the own station, the save station transmits an instruction to reassign a provisional address of a slave station having that provisional address and an instruction to delete the relevant provisional address collected by the master station, so that a provisional address can be assigned without duplication in the communication system.

When the provisional address is assigned without duplication, a distance measurement target is specified with using the generated provisional address, in the same manner as in Embodiment 1.

### *** Description of Effect of Present Embodiment ***

As has been described above, with the communication network according to the present embodiment, even if the slave station does not have a provisional address, the slave station can be identified temporarily by assigning the provisional address to the slave station with the master station.

### Embodiment 3.

In the present embodiment, differences from Embodiment 1 will mainly be described.

In the present embodiment, a configuration having the same function as its equivalent in Embodiment 1 will be denoted by the same reference sign as that in Embodiment 1, and its description will be omitted.

### *** Description of Configuration ***

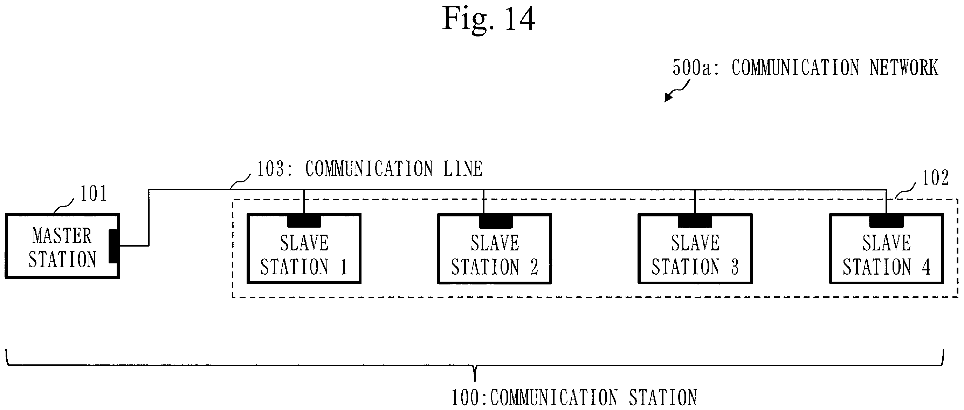

Fig. 14 is a diagram illustrating a configuration example of a communication network 500a according to the present embodiment.

In the configuration of the communication network 500a of Fig. 14, if the slave station does not have a provisional address in advance, a distance measurement target cannot be specified.

In view of this, in the present embodiment, a mode will be described in which a distance from the slave station to the master station is measured so that distance measurement can be performed even if the slave station does not have a provisional address beforehand.

A configuration of a communication station 100 according to the present embodiment is the same as that in Embodiment 1.

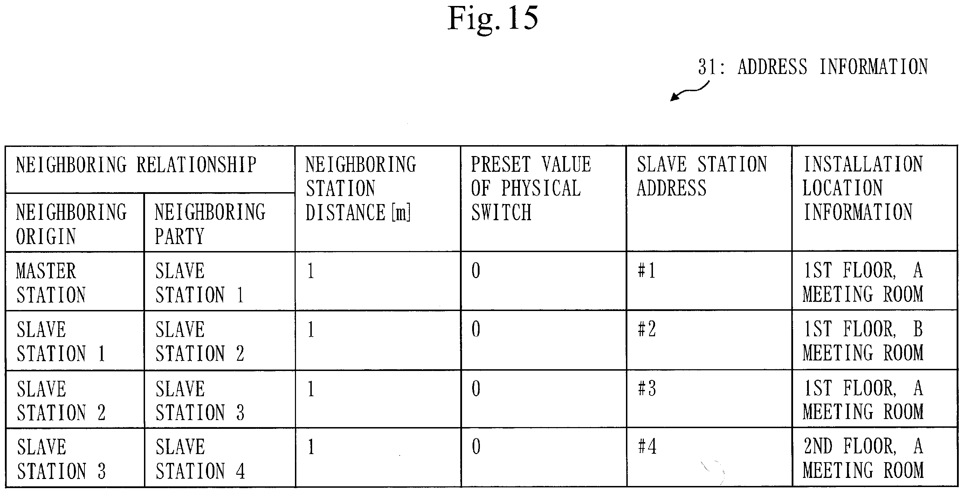

Fig. 15 is a diagram illustrating a configuration example of address information 31 according to the present embodiment.

The address information 31 is a table in which distances between slave stations and a master station are associated with slave station addresses to be assigned, as illustrated in Fig. 9.

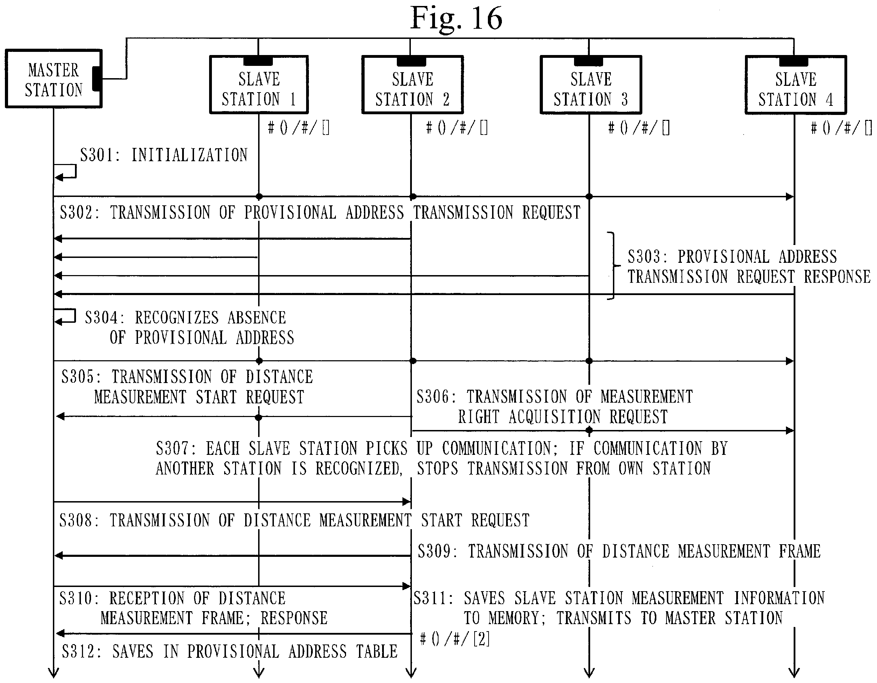

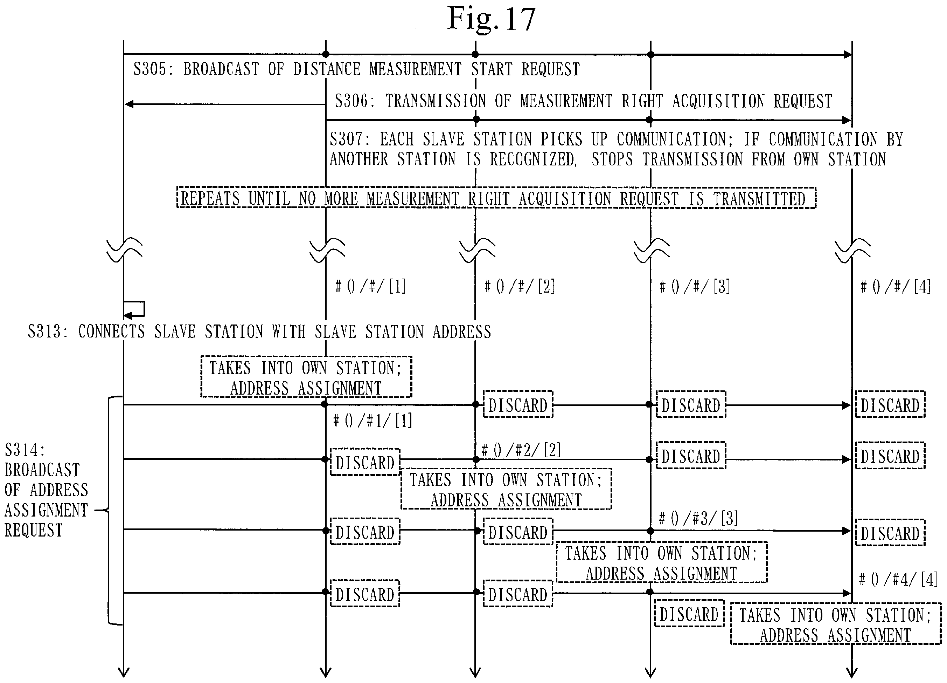

Figs. 16 and 17 are sequence diagrams illustrating operations of an address assignment process in the communication network 500a according to the present embodiment.

Fig. 17 illustrates a sequence as a sequel to the sequence of Fig. 16.

A provisional address assignment unit 141 of a master station, when having detected that a provisional address is not assigned to each slave station, transmits a distance measurement start request which requests measurement start of a distance to the master station, to each slave station. The provisional address assignment unit 141 of the master station receives a measurement right acquisition request from one slave station among a plurality of slave stations as a response to the distance measurement start request. The provisional address assignment unit 141 of the master station transmits a measurement right acquisition request response as a response to the measurement right acquisition request, to the one slave station, and receives a result of measuring a distance between the master station and the one slave station, from the one slave station as slave state measurement information.

A slave station address assignment unit 142 of the master station analyzes a connecting configuration of the master station with each slave station in the communication network 500 on a basis of the slave station measurement information of the master station and each slave station. The slave station address assignment unit 142 of the master station assigns the slave station address to the provisional address of each slave station, using the address information 31 in which is registered a slave station address to be assigned to a slave station identified from the connecting configuration.

Further, the provisional address assignment unit 141 of the slave station receives from the master station the distance measurement start request which requests each slave station to start measurement of the distance to the master station. The provisional address assignment unit 141 of the slave station transmits the measurement right acquisition request which requests acquisition of a measurement right, to the master station. When having received from the master station the measurement right acquisition request response which permits acquisition of the measurement right, the provisional address assignment unit 141 of the slave station carries out measurement of the distance to the master station, and transmits a measurement result to the master station as the slave station measurement information.

Note that a duplicate address detecting unit 143 of the slave station picks up communication of the measurement right acquisition request sent by another slave station. When having detected the communication of the measurement right acquisition request sent by another slave station, the duplicate address detecting unit 143 of the slave station stops transmission of the measurement right acquisition request of the own station. At a lapse of a predetermined period of time, the duplicate address detecting unit 143 of the slave station carries out transmission of the measurement right acquisition request again.

In step S301, the master station initializes a provisional address table 32.

Each slave station has a provisional address (#(n) in Figs. 16 and 17 where n is a positive integer), a slave station address (#m in Figs. 16 and 17 where m is a positive integer), and a distance measurement result ([p] in Figs. 16 and 17 where p is an arbitrary numerical value). However, the provisional address, the slave station address, and the distance measurement result are not set at the initial time point. A distance between the stations is a total sum of distances between the stations passed through.

Step S302 through step S304 are the same as step S202 through step S204 of Embodiment 2.

In step S305, the master station broadcasts the distance measurement start request to the slave stations.

In step S306, after receiving the distance measurement start request, the slave stations transmit the measurement right acquisition request to the master station at an arbitrary timing and regularly. At this time, a hash value or the like can be included in data part of the measurement right acquisition request and may be used for discrimination of a transmission frame.

In step S307, each slave station picks up communication of the measurement right acquisition request. If communication of a measurement right acquisition request by another slave station has been made prior to the own station, each slave station stops transmission from the own station, and at a lapse of a predetermined period of time, tries transmission again.

In step S308, the master station transmits to the slave station a distance measurement start request which requests start of measurement of the distance to the master station, as a response to the received measurement right acquisition request.

In step S309, if the slave station receives the distance measurement start request after transmitting the measurement right acquisition request, it means that the slave station has acquired a measurement right. Hence, the slave station starts measurement of the distance to the master station.

In step S310, the master station transmits a response to a distance measurement frame.

In step S311, the slave station saves slave station measurement information, which is a measurement result, in the volatile memory or nonvolatile memory of the own station, and transmits a distance measurement result (slave station measurement information) to the master station.

In step S312, the master station receives the distance measurement result (slave station measurement information) from the slave station to which the measurement right has been given, saves the distance measurement result (slave station measurement information) in the provisional address table, and broadcasts a measurement start frame again.

In the example of Figs. 16 and 17, the master station receives a distance measurement result (slave station measurement information) #()/#/[2] from the slave station 2 and saves it in the provisional address table 32.

After repeating the above procedure, if the master station does not receive a new measurement right acquisition request within a predetermined period of time, the master station decides that distance measurement is ended in all the slave stations.

The master station also grasps the number of slave stations existing in the communication network 500a, from the address information 31 which is stored in a storage unit 144 and with which assignment is to be performed, and confirms that pieces of data corresponding in number to the slave stations are recorded on the provisional address table 32. Thus, the master station can also grasp at an early stage that all slave stations have completed distance measurement, without waiting for the lapse of the predetermined period of time.

In step S313, if the master station grasps that distance measurement by the slave stations is completed, the master station compares the distance measurement result (slave station measurement information) stored in the provisional address table 32 with the address information 31, and checks agreement of the slave station corresponding to the distance measurement result (slave station measurement information) and the address to be allocated.

In step S314, the master station broadcasts an address assignment request including the distance measurement result (slave station measurement information) and the address to be assigned.

The slave station picks up the communication. If the communication data contains data that agrees with the distance measurement result (slave station measurement information) of the slave station, the slave station assigns an address which is in the address assignment request and which is to be assigned, as the slave station address of the own station, and saves this address in its volatile memory or nonvolatile memory. A slave station that has received an address assignment request that does not agree with the distance measurement result (slave station measurement result) of the own station discards the relevant communication data.

The master station repeats the above operation until reaching times corresponding in number to the slave stations kept in the provisional address table 32.

As has been described above, in the communication network according to the present embodiment, the master station instructs distance measurement start communication to each slave station. Each station measures a distance to the master station, and holds a measurement result in the storage device of the own station. Each slave station transmits the obtained distance measurement result to the master station. The master station collects the distance measurement result. The master station connects the collected the measurement result of the distances between the master station and the slave stations, with the relationship of the address to be assigned, and transmits an address assignment communication including the distance measurement result and the address to be assigned.

The slave station picks up the address assignment communication received from the master station, and analyzes the content of the received communication, so as to assign an address in the address assignment communication that agrees with the distance measurement result held by the own station with respect to the master station, in the own station.

### *** Description of Effect of Present Embodiment ***

As has been described above, with the communication network according to the present embodiment, it is possible to automatically assign an address to the slave station even if the slave station does not have a provisional address in advance. With the method presented by the present embodiment, a measurement result of the distance between the master station and the slave stations is used in Embodiment 1 as the provisional address, in place of the provisional address. Therefore, address assignment can be performed even when slave stations described in Embodiment 1 which are equidistant from the master station exist in the communication network.

In Embodiments 1 through 3 described above, the individual units in the address assignment device are described as independent function blocks. However, the configuration of the address assignment device is not limited to that described in the above embodiment. The function blocks of the address assignment device may have any configurations as far as they can implement the functions described in the above embodiments. The address assignment device may be a system formed of a plurality of devices in place of one device.

Of Embodiments 1 through 3, a plurality of portions may be practiced in combination. Alternatively, of these embodiments, one portion may be practiced. Furthermore, these embodiments may be practiced entirely or partially by any combination.

That is, in Embodiments 1 to 3, the individual embodiments can be freely combined, an arbitrary configuration element of the individual embodiment can be modified, and an arbitrary configuration element in the individual embodiment can be omitted.

The embodiments described above are essentially preferred exemplifications, and are not intended to limit the scope of the present disclosure, the scope of applied products of the present disclosure, and the scope of usage of the present disclosure. The embodiments described above can be changed in various manners when necessary. For example, the procedures described with using the flowcharts or sequence diagrams may be changed as necessary.

### Reference Signs List

31: address information; 32: provisional address table; 100: communication station; 101: master station; 102: slave station; 103: communication line; 104: equidistant slave station; 110: distance measuring circuit; 120: communication circuit; 130: control unit; 140: address assignment device; 141: provisional address assignment unit; 142: slave station address assignment unit; 143: duplicate address detecting unit; 144: storage unit; 145: physical switch; 500, 500a: communication network; 909: electronic circuit; 910: processor; 921: memory; 922: auxiliary storage device; 930: input interface; 940: output interface; 950: communication device.

## Claims

1. An address assignment device provided to a master station involved in a communication network in which the master station and a plurality of slave stations are connected via a communication line, the address assignment device comprising:
a provisional address assignment unit to acquire a provisional address of each slave station of the plurality of slave stations, and a distance measurement result obtained by measuring a distance between the master station and each slave station; and to register the provisional address of each slave station and the distance measurement result of the master station and each slave station, with a provisional address table;
a duplicate address detecting unit to extract a plurality of slave stations equidistant from the master station, as equidistant slave stations on a basis of the distance measurement result of the master station and each slave station; to request each of the equidistant slave stations to measure a distance to a neighboring slave station; to acquire a result obtained by measuring the distance between each of the equidistant slave stations and the neighboring slave station, as a neighboring distance result; and to register provisional addresses of the equidistant slave stations and the neighboring distance result of each of the equidistant slave stations and the neighboring slave station, with the provisional address table; and
a slave station address assignment unit to analyze a connecting configuration of the mater station with each slave station in the communication network on a basis of the provisional address table; and to assign a slave station address for the provisional address of each slave station with using address information in which is registered a slave station address to be assigned to a slave station identified from the connecting configuration.

2. The address assignment device according to claim 1,
wherein the provisional address assignment unit transmits, to each slave station of the plurality of slave stations, a provisional address transmission request which requests transmission of the provisional address; and receives the provisional address of each slave station of the plurality of slave stations, as a response to the provisional address transmission request.

3. The address assignment device according to claim 1,
wherein the provisional address assignment unit, when having detected that a provisional address is not assigned to each slave station of the plurality of slave stations, transmits a provisional address generation request which requests generation of a provisional address, to each slave station of the plurality of slave stations; receives a provisional address of each slave station of the plurality of slave stations as a response to the provisional address generation request; when having confirmed that the received provisional address is not registered with the provisional address table, registers the received provisional address with the provisional address table; and transmits a use permission of the received provisional address to a transmission-source slave station.

4. The address assignment device according to any one of claims 1 to 3,
wherein the duplicate address detecting unit transmits to each of the equidistant slave stations a neighboring station measurement request which requests each of the equidistant slave stations to measure a distance to a neighboring slave station and which includes a provisional address of a slave station being a measurement target, on a basis of a provisional address list in which the provisional address of the slave station being the measurement target is associated with the provisional address of each slave station of the plurality of slave stations.

5. An address assignment device provided to a master station involved in a communication network in which the master station and a plurality of slave stations are connected via a communication line, the address assignment device comprising:
a provisional address assignment unit to transmit, when having detected that a provisional address is not assigned to each slave station of the plurality of slave stations, a distance measurement start request which requests measurement start of a distance to the master station, to each slave station; to transmit, when having received a measurement right acquisition request from one slave station among the plurality of slave stations as a response to the distance measurement start request, a measurement right acquisition request response as a response to the measurement right acquisition request, to the one slave station; and to receive a result of measuring a distance between the master station and the one slave station, from the one slave station as slave state measurement information; and
a slave station address assignment unit to analyze a connecting configuration of the master station with each slave station in the communication network on a basis of the slave station measurement information of the master station and each slave station; and to assign a slave station address to a provisional address of each slave station, using address information in which is registered a slave station addresses to be assigned to a slave station identified from the connecting configuration.

6. The address assignment device according to any one of claims 1 to 5,
wherein each slave station of the plurality of slave stations comprises a physical switch,
wherein a preset value of the physical switch is registered in the address information for each slave station of the plurality of slave stations, and
wherein the slave station address assignment unit acquires, from each slave station of the plurality of slave stations, a value being set in the physical switch provided to the slave station, as assignment information; and assigns the slave station address for the provisional address of the slave station identified from the acquired assignment information and the acquired connecting configuration.

7. The address assignment device according to any one of claims 1 to 6, comprising
a storage unit to acquire the address information from an outside by a management station connected via the communication line; and to store the acquired address information.

8. An address assignment device provided to a plurality of slave stations involved in a communication network in which a master station and the slave stations are connected via a communication line, the address assignment device comprising:
a provisional address assignment unit to generate, when having received from the master station a provisional address generation request which requests generation of the provisional address, a provisional address for an own station; and to transmit a use application request which requests use application of the provisional address of the own station, to the master station; and
a duplicate address detecting unit to pick up a use application request sent by another slave station; and to transmit, when having detected a provisional address that duplicates the provisional address of the own station, a use application non-permission request which requests non permission for a use application of a provisional address that duplicates the provisional address of the own station, to the master station and a transmission-source slave station having the provisional address that duplicates the provisional address of the own station.

9. An address assignment device provided to a plurality of slave stations involved in a communication network in which a master station and the slave stations are connected via a communication line, the address assignment device comprising:
a provisional address assignment unit to transmit, when having received from the master station a distance measurement start request which requests each slave station of the plurality of slave stations to start measurement of a distance to the master station, a measurement right acquisition request which requests acquisition of a measurement right, to the master station; to carry out, when having received from the master station a measurement right acquisition request response which permits acquisition of the measurement right, measurement of the distance to the master station; and to transmit a measurement result to the master station as slave station measurement information.

10. The address assignment device according to claim 9, comprising
a duplicate address detecting unit to pick up communication of the measurement right acquisition request sent by another slave station; to stop, when having detected the communication of the measurement right acquisition request sent by another slave station, transmission of the measurement right acquisition request by an own station; and to carry out, at a lapse of a predetermined period of time, transmission of the measurement right acquisition request again.

11. The address assignment device according to any one of claims 1 to 10, which, when a new slave station is connected to the communication network, starts an address assignment process for the plurality of slave stations.

12. An address assignment method employed in an address assignment device provided to a master station involved in a communication network in which the master station and a plurality of slave stations are connected via a communication line, the address assignment method comprising:
by a computer, acquiring a provisional address of each slave station of the plurality of slave stations, and a distance measurement result obtained by measuring a distance between the master station and each slave station; and registering the provisional address of each slave station and the distance measurement result of the master station and each slave station, with a provisional address table;
by the computer, extracting a plurality of slave stations equidistant from the master station, as equidistant slave stations on a basis of the distance measurement result of the master station and each slave station; requesting each of the equidistant slave stations to measure a distance to a neighboring slave station; acquiring a result obtained by measuring the distance between each of the equidistant slave stations and the neighboring slave station, as a neighboring distance result; and registering provisional addresses of the equidistant slave stations and the neighboring distance result of each of the equidistant slave stations and the neighboring slave station, with the provisional address table; and
by the computer, analyzing a connecting configuration of the mater station with each slave station in the communication network on a basis of the provisional address table; and assigning a slave station address for the provisional address of each slave station with using address information in which is registered a slave station address to be assigned to a slave station identified from the connecting configuration.

13. An address assignment program employed in an address assignment device provided to a master station involved in a communication network in which the master station and a plurality of slave stations are connected via a communication line, the address assignment program causing the address assignment device being a computer to execute:
a provisional address assignment process of acquiring a provisional address of each slave station of the plurality of slave stations, and a distance measurement result obtained by measuring a distance between the master station and each slave station; and registering the provisional address of each slave station and the distance measurement result of the master station and each slave station, with a provisional address table;
a duplicate address detection process of extracting a plurality of slave stations equidistant from the master station, as equidistant slave stations on a basis of the distance measurement result of the master station and each slave station; requesting each of the equidistant slave stations to measure a distance to a neighboring slave station; acquiring a result obtained by measuring the distance between each of the equidistant slave stations and the neighboring slave station, as a neighboring distance result; and registering provisional addresses of the equidistant slave stations and the neighboring distance result of each of the equidistant slave stations and the neighboring slave station, with the provisional address table; and
a slave station address assignment process of analyzing a connecting configuration of the mater station with each slave station in the communication network on a basis of the provisional address table; and assigning a slave station address for the provisional address of each slave station with using address information in which is registered a slave station address to be assigned to a slave station identified from the connecting configuration.
